# EUROPEAN PATENT SPECIFICATION

(11) **EP 0 704 368 B1**
(45) Date of publication and mention of the grant of the patent: **23.02.2000**
(21) Application number: 95114801.4
(22) Date of filing: 20.09.1995
(51) Int. Cl.: B62D 51/00

(54) **Operation lever turn-stop and unlocking mechanisms in lever device**
Verdrehsicherung für Betätigungshebel und Entriegelungsmechanik für einen Hebel
Blocage de rotation pour manettes d'actionnement et mécanismes de déblocage dans une manette

(30) Priority: 29.09.1994 JP 25911594; 02.11.1994 JP 29403494
(43) Date of publication of application: 03.04.1996
(60) Divisional application: 98118201.7
(73) Proprietor: STARTING INDUSTRIAL CO., LTD., Tokyo 167 (JP)
(72) Inventor: Tsunoda, Shuhei, Gunma-gun, Gunma-ken (JP); Shimizu, Keizo, Gunma-ken (JP); Kaneniwa, Toshimichi, Gunma-ken (JP); Shibasaki, Minoru, Kitagunma-gun, Gunma-ken (JP)
(74) Representative: Sperling, Rüdiger, Dipl.-Ing.

(56) References cited:
- AU-B- 440 748
- GB-A- 959 112
- US-A- 4 167 221

## Description

The present invention relates to a lever device for controlling the operation of an agricultural machine, or the like, and particularly relates to a turn-stop mechanism for preventing an operation lever of the lever device mounted on an operation handle shaft from turning around the handle shaft in operation.

Generally, an operation lever for controlling an operation mechanism such as a clutch mechanism, a braking mechanism, an engine mechanism, or the like, is mounted on a handle shaft of an agricultural machine such as a cultivator, a binder, a rice-planter, a rice-harvester, a mowing machine, or the like. The operation lever and the aforementioned mechanism are connected by means of a control wire so that the operation of the mechanism is controlled by pulling the operation lever upward by fingers while gripping a handle shaft.

Hereupon, when such an operation lever is pulled with strong force, the lever may be turned around the handle shaft. There arises a disadvantage in that the lever may become poor in operating property.

To avoid such a disadvantage, a mount stay for supporting each lever may be tightened on the handle shaft as described in GB-A-959 112. The mount stay is, however, often broken when tightening force is so strong, because the mount stay is recently formed from synthetic resin, aluminum, or the like. There is therefore a disadvantage that it is impossible to set the tightening force so strong.

It is therefore an object of the present invention to eliminate the aforementioned disadvantages and to provide an operation lever turn-stop mechanism in which turn-stop of the operation lever can be performed effectively without specially strong force for tightening the mount stay.

In order to achieve the foregoing object, in a lever device in which a band disposed on one side of a handle shaft portion for operating an agricultural machine and a lever supporting mount stay disposed on the other side of the handle shaft are clamped and fixed through clamp bolts, the operation lever turn-stop mechanism in the lever device according to the present invention is characterized in that a concave portion is formed in an inner surface of either one of the band and the mount stay contacting with a surface of the handle shaft, and a turn-stop member having a protruding portion capable of biting into the surface of the handle shaft is fitted in the concave portion.

According to such a configuration of the present invention, the protruding portion at an end of the turn-stop member bites into the surface of the handle shaft when the mount stay is tightened and fixed to the band even with not so strong tightening force. Accordingly, when force of rotation around the handle shaft is exerted on the mount stay at the time of operating the lever, the biting of the turn-stop member effectively prevents the mount stay from turning. Accordingly, even in the case of a mount stay formed from synthetic resin, aluminum, or the like, the mount stay is securely prevented from turning, so that a smooth lever operation can be carried out.

In the preferred embodiment of the invention, in a lever device in which a mount stay is fixed on a handle shaft of an agricultural machine, an operation lever of an operative mechanism is pivotally mounted on said mount stay so as to be operated up/down turnably, and a drum of a control wire for controlling the operative mechanism is mounted on a lower portion of the operation lever, the unlocking mechanism in the lever device according to the present invention is characterized in that a lock lever for holding the operation lever in an upward turned state is mounted on the operation lever so as to be operated up/down turnably around the drum; that a front portion of the lock lever is urged to turn upward by means of a spring so that the front portion of the lock lever engages with an engagement portion formed in the mount stay when the operation lever is turned upward; and that a finger placing portion is formed at a rear portion of the lock lever so that the finger placing portion projects toward a side of the handle shaft when the lock lever engages with the engagement portion, the front portion of the lock lever being disengaged from the engagement portion of the mount stay when the finger placing portion is pressed against the spring force so that the lock lever is turned downward.

Preferably, the finger placing portion is located above the operation lever when the front portion of the lock lever engages with the engagement portion.

In such a configuration, when the operation lever is pulled to turn upward, the lock lever is turned upward around the drum by spring force so that the front portion of the lock lever engages with the engagement portion of the mount stay. Accordingly, the operation lever is locked in an upward turned state so as to be kept in this state without turning downward even in the case where the hold of the operation lever is released.

When the finger placing portion of the lock lever projecting toward a side of the handle shaft is pushed down against the spring force of the aforementioned spring by the thumb of the fingers gripping the handle shaft, the front portion of the lock lever is disengaged from the aforementioned engagement portion and the aforementioned lock is forcedly unlocked so that the operation lever returns to its initial position.

These and other objects of the present invention will be seen by reference to the following description of the preferred embodiments, taken in conjunction with the accompanying drawings, in which:
Fig. 1 is a side view of a lever device according to a preferred embodiment of the present invention;
Fig. 2 is a partly cutaway front view of the aforementioned lever device;
Fig. 3 is an exploded perspective view of a lever turn-stop mechanism in the aforementioned lever device;
Fig. 4 is a perspective view of another example of the turn-stop member;
Fig. 5 is a sectional view of another example of the turn-stop mechanism.

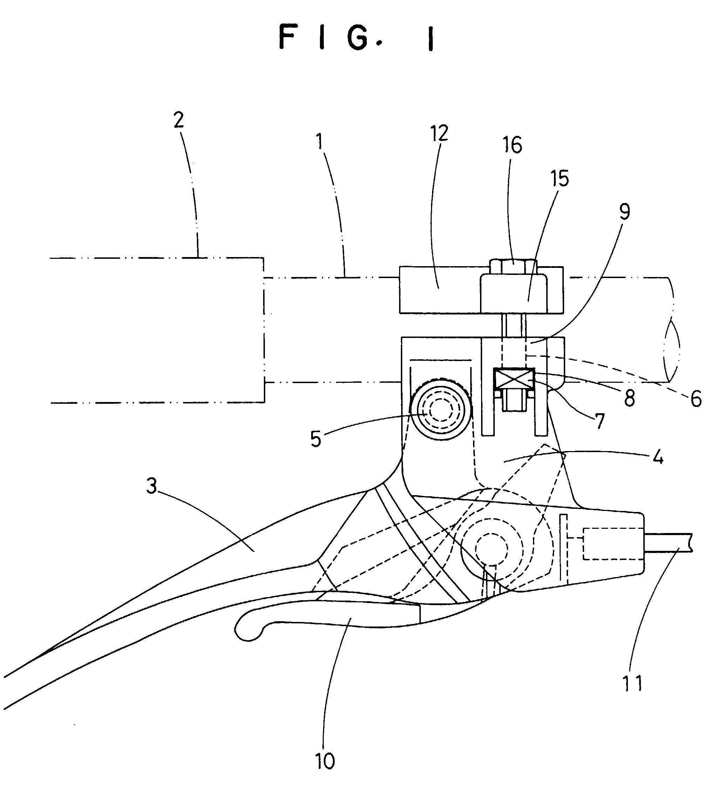

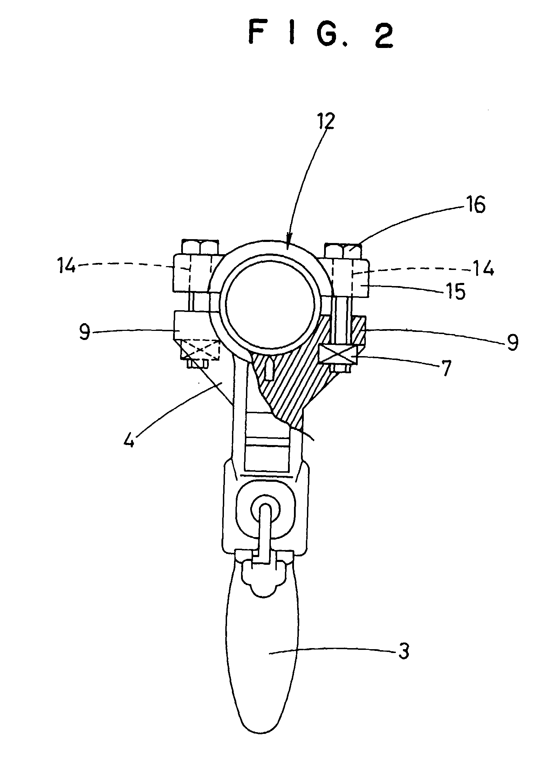

In Figs. 1 and 2, the reference numeral 1 designates a shaft portion of a handle for operating an agricultural machine; and 2, a grip. A clutch lever 3 which is an operation lever is provided on the handle shaft 1.

The clutch lever 3 is provided on the mount stay 4 so as to be able to turn vertically around a shaft portion 5. The mount stay 4 is formed from synthetic resin, and an upper surface of the mount stay 4 is shaped to be concave so as to closely contact with the handle shaft 1. The mount stay 4 is disposed so as to contact with the lower side surface of the handle shaft 1. Further, a housing portion is formed in the mount stay 4 so as to turnably receive a base portion of the clutch lever 3 therein. The shaft portion 5 is formed integrally with the base portion of the clutch lever 3 and is received in the housing portion of the mount stay 4 so as to be supported turnably. Further, screw-receiving portions 9 each having a screwhole 6 and a groove 8 for receiving a nut 7 are formed on opposite sides of the mount stay 4 so as to project therefrom. The reference numeral 10 designates a lock lever; and 11, a control wire which is operated to move by pulling/releasing the lever.

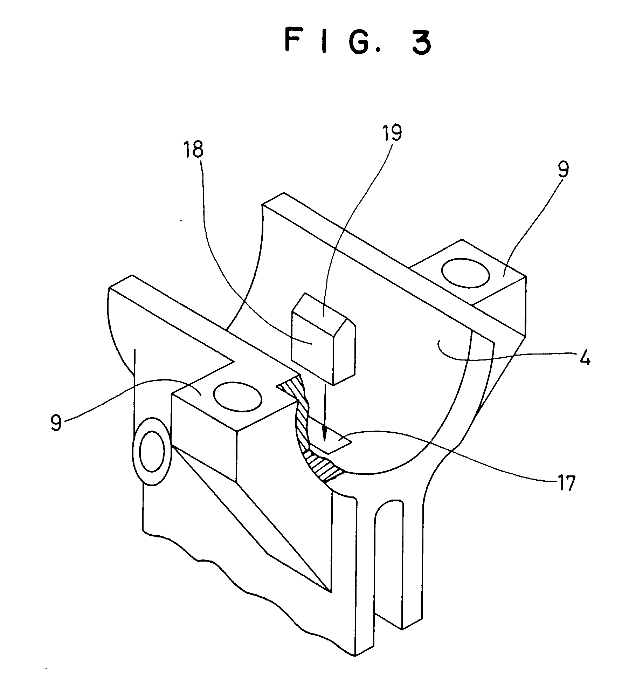

Thus, the mount stay 4 of the aforementioned clutch lever 3 is, together with a band 12, fixed on the handle shaft 1. The band 12 is also formed from synthetic resin and disposed so as to contact with an upper side of the handle shaft 1. As shown in Fig. 3, substantially semicylindrical screw-receiving portions 15 respectively having screwholes 14 are formed so as to project from the opposite side portions of the band respectively.

Next, in order to fix the mount stay 4 to the band 12 on the handle shaft 1, bolts 16 passing through the screwholes 6 of the mount stay 4 are inserted into the screwholes 14 of the band 12, tightened and fixed in the condition in which the nuts 7 are thread-engaged with the bolts 16 respectively.

Hereupon, as shown in Figs. 2 and 3, a concave portion 17 is formed in the inner surface of the mount stay 4 contacting the surface of the aforementioned handle shaft 1. A turn-stop member 18 is fitted into the concave portion 17. The turn-stop member 18 is formed from a hard material such as a metal, or the like. A protruding portion 19 which is shaped like a triangle in section and which is sharp so as to be able to bite into the surface of the aforementioned handle shaft 1 is formed at a top end of the turn-stop member 18.

Therefore, according to the aforementioned configuration, the protruding portion 19 at the top end of the turn-stop member 18 bites into the surface of the handle shaft 1 when the mount stay 4 is tightened and fixed onto the band 12 even if the tightening force is not so strong. Accordingly, when force of rotation around the handle shaft 1 is exerted on the mount stay 4 at the time of operating the lever 3, or the like, the biting of the turn-stop member 18 effectively prevents the mount stay 4 from turning. Accordingly, even in the case of a mount stay 4 formed from synthetic resin, aluminum, or the like, the mount stay 4 is securely prevented from turning, so that a smooth lever operation can be carried out.

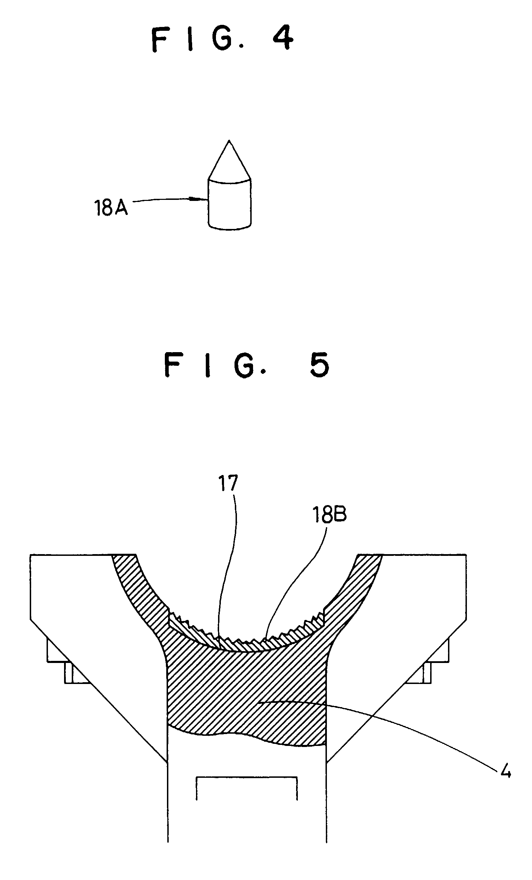

Incidentally, the turn-stop mechanism is not limited to the aforementioned embodiment. For example, as shown in Fig. 4, the turn-stop member 18 may be made to have a shape of a combination of a cylinder and a cone.

Alternatively, as shown in Fig. 5, the turn-stop member 18 may be shaped like a plate member 18B having a rough surface.

Further, the turn-stop mechanism may be applied to any lever such as a brake lever, etc. other than the clutch lever and the turn-stop mechanism may be disposed not on the mount stay 4 but on the band 12. That is, the concave portion 17 may be formed in the inner surface of the band 12 so that the aforementioned turn-stop member 18 is fitted into the concave portion 17.

## Claims

1. A lever device in which a band (12) disposed on one side of a handle shaft portion (1) for operating an agricultural machine and a mount stay (4) disposed on the other side of the handle shaft for supporting an operation lever are clamped and fixed through clamp bolts (16),
an operation lever turn-stop mechanism provided in said lever device, characterized in that a concave portion (17) is formed in an inner surface of either one of said band and said stay contacting with a surface of said handle shaft, and a turn-stop member (18, 18A, 18B) having a protruding portion (19) capable of biting into the surface of said handle shaft is fitted in said concave portion.

2. A lever device according to claim 1, characterized in that, an operation lever (3) of an operation mechanism is pivotally mounted on said mount stay so as to be operated up/down turnably, and a drum (11c) of a control wire (11) for controlling said operation mechanism is mounted on a lower portion of said operation lever;
an operation lever unlocking mechanism is provided in said lever device,
a lock lever (10) for holding said operation lever in an upward turned state is mounted on said operation lever so as to be operated up/down turnably around said drum;
a front portion (lOb) of said lock lever is urged to turn upward by means of a spring (16) so that said front portion of said lock lever engages with an engagement portion (23) formed in said mount stay when said operation lever is turned upward; and
a finger placing portion (25) is formed at a rear portion of said lock lever so that said finger placing portion projects toward a side of said handle shaft when said lock lever engages with said engagement portion, said front portion of said lock lever being disengaged from said engagement portion of said mount stay when said finger placing portion is pressed against the spring force so that said lock lever is turned downward.

3. A lever device according to Claim 2, wherein said finger placing portion is located above said operation lever when said front portion of said lock lever engages with said engagement portion.

## Patentansprüche

1. Hebelvorrichtung, bei der ein Band (12), das an einer Seite eines Handgriffschaftabschnitts (1) zur Betätigung einer landwirtschaftlichen Maschine angeordnet ist, und ein Befestigungsbügel (4) zum Haltern eines Betätigungshebels, der an der anderem Seite des Handgriffschafts angeordnet ist, durch Klemmschrauben (16) festgeklemmt und befestigt sind,
ein Betätigungshebel-Drehstoppmechanismus in der Hebelvorrichtung vorgesehen ist, dadurch gekennzeichnet, daß ein konkaver Abschnitt (17) in einer inneren Oberfläche entweder des Bandes oder des Bügels, die mit der Oberfläche des Handgriffschaftes in Berührung steht, gebildet ist, und ein Drehstoppelement (18, 18A, 18B), das einen vorspringenden Abschnitt (19) hat, der in der Lage ist, sich in die Oberfläche des Handgriffschaftes einzukrallen, in den konkaven Abschnitt eingesetzt ist.

2. Hebelvorrichtung nach Anspruch 1, dadurch gekennzeichnet, daß ein Betätigungshebel (3) eines Betätigungsmechanismus an dem Befestigungsbügel schwenkbar angebracht ist, so daß er nach oben/unten schwenkbar zu betätigen ist, und eine Walze (11c) eines Steuerdrahtes (11) zur Steuerung des Betätigungsmechanismus an einem unteren Abschnitt des Betätigungshebels angebracht ist;
ein Betätigungshebel-Entriegelungsmechanismus in der Hebelvorrichtung vorgesehen ist;
ein Verriegelungshebel (10) zum Halten des Betätigungshebels in einem nach oben geschwenkten Zustand an dem Betätigungshebel so angebracht ist, daß er nach oben/unten um die Walze schwenkbar zu betätigen ist;
ein vorderer Abschnitt (10b) des Verriegelungshebels mittels einer Feder (16) zum Verschwenken nach oben beaufschlagt ist, so daß der vordere Abschnitt des Verriegelungshebels mit einem in dem Befestigungsbügel gebildeten Eingriffsabschnitt (23) in Eingriff kommt, wenn der Betätigungshebel nach oben geschwenkt wird; und
ein Fingeranlegeabschnitt (25) an einem hinteren Abschnitt des Verriegelungshebels gebildet ist, so daß der Fingeranlegeabschnitt zu einer Seite des Handgriffschaftes hin vorragt, wenn der Verriegelungshebel mit dem Eingriffsabschnitt in Eingriff ist, wobei der vordere Abschnitt des Verriegelungshebels außer Eingriff mit dem Eingriffsabschnitt des Befestigungsbügels kommt, wenn der Fingeranlegeabschnitt gegen die Federkraft gedrückt wird, so daß der Verriegelungshebel nach unten geschwenkt wird.

3. Hebelvorrichtung nach Anspruch 2, bei welcher der Fingeranlegeabschnitt oberhalb des Betätigungshebels angeordnet ist, wenn der vordere Abschnitt des Verriegelungshebels mit dem Eingriffsabschnitt in Eingriff ist.

## Revendications

1. Un dispositif à levier avec d'une part un étrier (12) et d'autre part un porte-levier (4) solidarisés par boulons de fixation (16) autour d'une section tige de mancheron (1) servant à commander une machine agricole; le dispositif à levier intègre un mécanisme de blocage de rotation de levier, charactérisé en ce qu'une concavité (17) est formée à la surface intérieure de l'étrier ou du porte-levier en contact avec une surface de la tige de mancheron, et qu'un élément de blocage de rotation (18, 18A, 18B) est logé dans la concavité et possède une section en saillie (19) apte à mordre dans la surface de la tige de mancheron.

2. Un dispositif à levier selon la revendication 1, charactérisé en ce que avec la caractéristique que le levier de commande (3) de mécanisme est fixé par pivot sur le porte-levier (4) de manière à permettre un actionnement par rotation dans le sens haut/bas, et que le tambour (11c) d'un câble de commande (11) du mécanisme est monté à la partie inférieure du levier de commande; un mécanisme de déverrouillage du levier de commande est intégré dans le dispositif à levier, un verrou (10) servant à bloquer le levier de commande en position haute est monté sur le levier de commande de manière à s'actionner par pivotement dans le sens haut/bas autour du tambour; la section avant (10) du verrou de blocage est forcée vers le haut par un ressort (16) de telle manière que lorsque le levier de commande est actionné vers le haut la section avant du verrou s'engage dans une section d'engrènement (23) formée dans le porte-levier; et une section pose-doigt (25) est formée à l'arrière du verrou de telle manière qu'elle se trouve en saillie vers un côté de la tige de mancheron lorsque le verrou s'engage dans la section d'engrènement; la section avant du verrou se désengage de la section d'engrènement du porte-levier par pression exercée sur le ressort entrainant l'abaissement du verrou de blocage.

3. Un dispositif à levier selon la revendication 2, dans lequel la section pose-doigt se trouve au-dessus du levier de commande lorsque la section avant du verrou s'engage dans la section d'engrènement.
